# EUROPÄISCHE PATENTSCHRIFT

(11) **EP 0 960 284 B1**
(45) Veröffentlichungstag und Bekanntmachung des Hinweises auf die Patenterteilung: **29.07.2009**
(21) Anmeldenummer: 98909429.7
(22) Anmeldetag: 06.02.1998
(51) Int. Cl.: F16B 47/00, A46B 5/00

(54) **HAFTELEMENT MIT EINEM SAUGNAPF**
ADHESIVE ELEMENT WITH A SUCTION CUP
ELEMENT ADHESIF MUNI D'UNE VENTOUSE

(30) Priorität: 17.02.1997 CH 35497
(43) Veröffentlichungstag der Anmeldung: 01.12.1999
(73) Patentinhaber: Unilever N.V., 3013 AL Rotterdam (NL); Unilever PLC, London EC4Y 0DY (GB)
(72) Erfinder: HUBER, Beat, CH-6233 Büron (CH)
(74) Vertreter: Whaley, Christopher
(86) Internationale Anmeldenummer: PCT/EP1998/000720
(87) Internationale Veröffentlichungsnummer: WO 1998/036182

(56) Entgegenhaltungen:
- EP-A- 0 611 533
- CH-A- 658 104
- US-A- 2 144 159
- US-A- 4 945 598
- US-A- 5 104 077

## Beschreibung

Die Erfindung bezieht sich auf eine Zahnbürste mit einem Haftelement mit einem Saugnapf nach dem Oberbegriff des Anspruchs 1.

Mit einem Saugnapf ausgestattete Haftelemente sind allgemein bekannt und dienen beispielsweise mit einem Haken versehen in Badezimmern zum Aufhängen von Gegenständen, beispielsweise von Tücher. Der aus einem härteren Werkstoff als der Saugnapf bestehende Haken ist in der Regel an der Aussenseite des Saugnapfes mit diesem verbunden.

Eine Zahnbürste, die mit einem Saugnapf aufgehängt werden kann, ist aus der US 1 899 242 A bekannt.

Ferner ist bei einer aus der EP 0 611 533 A bekannten Zahnbürste mit einem Haftelement gemäss dem Oberbegriff des Anspruchs 1 das Haftelement am Griffende der Zahnbürste angeordnet, damit diese in der Regel auf eine horizontale Fläche senkrecht aufstellbar ist. Der aus einem gummielastischen Kunststoff bestehende Saugnapf ist mit seiner Kopfseite mit dem Griff der Zahnbürste verbunden. Er kann entweder separat vom Griff hergestellt und durch eine Kleb- oder mechanische Verbindung mit dem Griff verbunden oder einstückig mit einer griffigen Umhüllung des Griffes durch ein Spritzgiessverfahren hergestellt sein.

Nachteilig ist bei diesen bekannten Haftelement an der Zahnbürste die grosse Nachgiebigkeit des Saugnapfes, wodurch die Standfestigkeit in Frage gestellt ist.

Der Erfindung liegt daher die Aufgabe zugrunde, eine Zahnbürste mit einem Haftelement zu schaffen, welches ohne Beeinträchtigung der Haftfähigkeit eine erhöhte Standfestigkeit gewährleistet.

Die gestellte Aufgabe wird erfingungsgemäss durch die Merkmale des Anspruchs 1 und weiterer Ansprüche gelöst.

Durch die erfindungsgemässe Lösung ergibt sich eine Versteifung des Saugnapfes, sodass dessen Neigungsmöglichkeit verkleinert ist. Die ist insbesondere dann von Vorteil, wenn ein langgestreckter Gegenstand senkrecht zu einer Befestigungsfläche entweder vertikal oder auch horizontal befestigt wird. Weiter lässt sich verhindern, dass Fugen vorhanden sind, in welch Verunreinigungen eindringen können.

Weitere Vorteile der Erfindung ergeben sich aus der nachfolgenden Erläuterung eines Ausführungsbeispiels.

Anhand der Zeichnung wird ein Ausführungsbeispiel der Erfindung näher erläutert. Es zeigt:
- Fig. 1:: ein Haftelement mit einem Saugnapf und einem Verbindungselement zum Befestigen einer Zahnbürste und
- Fig. 2:: das Haftelement nach Fig. 1 mit einer daran befestigten Zahnbürste.

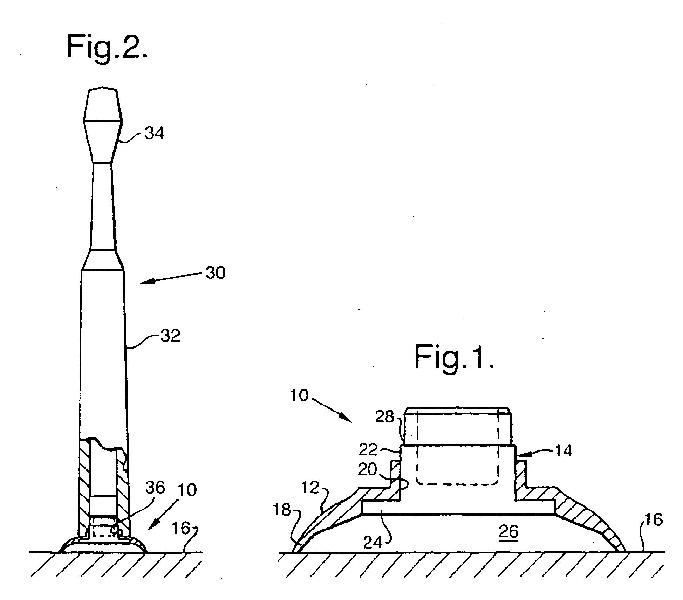

Das in der Fig. 1 dargestellte Haftelement **10** weist einen aus einem gummielastischen Kunststoff besehenden Saugnapf **12** und ein damit verbundenes aus einem härteren Kunststoff bestehendes Verbindungselement **14** auf. Der Saugnapf **12** ist in entlastetem Zustand auf einer ebenen glatten Fläche **16** dargestellt, auf welcher er mit seinem Dichtrand **18** aufliegt.

Das Verbindungselement **14** weist einen eine Aussparung **20** im Saugnapf **12** koaxial durchsetzenden Zapfen **22** auf. Der Zapfen **22** weist einen Flanschrand **24** auf, mit dem er den Saugnapf **12** in seinem Inneren **26** hintergreift. Auf der Aussenseite des Saugnapfes **12** ragt der Zapfen **22** zum Verbinden mit einem zu fixierenden Gegenstand heraus. Am herausragenden Ende weist der Zapfen **22** einen Absatz **28** auf.

Der Saugnapf **12** ist mit dem Verbindungselement **14** vorzugsweise durch ein Zweikomponenten-Spritzgiessverfahren unlösbar verbunden. Dadurch is gewährleistet, dass der Saugnapf **12** keine undichten Stellen aufweist, welche seine Haftfähigkeit beeinträchtigen könnten. Es ist aber auch möglich, eine unlösbare Verbindung durch Ultraschallschweissen, Kleben oder Schweissen durch Wärmezufuhr herzustellen.

Es ist auch denkbar, das Verbindungselement aus einem anderen Werkstoff als aus Kunststoff herzustellen, beispielweise aus Metall. In einem solchen Fall könnte die unlösbare Verbindung zwischen dem Saugnapf und dem Verbindungselement eine Klebverbindung sein.

Durch den im Inneren **26** des Saugnapfes **12** anliegenden Flanschrand **24** des Verbindungselementes **14** ergibt sich eine Stabilisierung des Saugnapfes **12.** Dadurch wird einerseits die Standfestigkeit des Haftelementes **10** erhöht und andererseits das Ablösen des Haftelementes **10** von der Fläche **16** infolge der Hebelwirkung erleichtert.

Da das Verbindungselement **14** aus einen härteren Werkstoff als der Saugnapf **12** besteht, ist auch eine solidere Verbindung zu dem zu fixierenden Gegenstand gewährleistet.

In der Fig. 2 ist das Haftelement **10** gemäss Fig. 1 an einer selbststehenden Zahnbürste **30** angeordnet. Diese weist als wesentliche Elemente einen hohlen Griff **32** und einen Bürstenkopf **34** auf. Zur Befestigung dringt das herausragende Ende des Zapfes **22** des Verbindungselementes **14** in eine Aussparung **36** des hohlen Griffes **32** der Zahnbürste **30** ein.

Die Zahnbürste **30** ist vorzugsweise mit dem Haftelement **10** durch Ultraschallschweissen unlösbar verbunden. Es ist aber auch möglich, die Teile **30** und **10** durch Kleben oder Wärmezufuhr miteinander zu verbinden. Dabei kann der Griff **32** entweder mit dem weichen Saugnapf **12** oder mit dem härteren Verbindungselement **14** verbunden sein. Durch eine solche Verbindung lässt sich verhindern, dass Fugen vorhanden sind, in welche Verunreinigungen eindringen können.

## Patentansprüche

1. Zahnbürste, die unlösbar mit einem Haftelement **(10)** zum Fixieren der Zahnbürste **(30)** auf einer ebenen glatten Fläche **(16),** mit einem aus einem gummielastischen Kunststoff bestehenden und einen Dichtrand **(18)** aufweisenden Saugnapf **(12)**, verbunden ist, **dadurch gekennzeichnet, dass** der Saugnapf **(12)** unlösbar mit einem Verbindungselement **(14)** zum Anbringen der Zahnbürste **(30)** verbunden ist, dass das Verbindungselement **(14)** aus einem Werkstoff besteht, welcher härter ist als der Kunststoff des Saugnapfes **(12)**, und dass die Zahnbürste **(30)** mit dem Haftelement **(10)** durch Ultraschallschweissen, Kleben oder Wärmezufuhr verbunden ist.

2. Zahnbürste mit einem Haftelement nach Anspruch 1, **dadurch gekennzeichnet, dass** das Verbindungselement **(14)** aus Kunststof besteht.

3. Zahnbürste mit einem Haftelement nach Anspruch 1 oder 2, **dadurch gekennzeichnet, dass** der Saugnapf **(12)** und das Verbindungselement **(14)** im Zweikomponenten-Spritzgiessverfahren hergestellt und **dadurch** unlösbar miteinander verbunden sind.

4. Zahnbürste mit einem Haftelement nach Anspruch 1 oder 2, **dadurch gekennzeichnet, dass** der Saugnapf **(12)** und das Verbindungselement **(14)** durch Ultraschallschweissung unlösbar miteinander verbunden sind.

5. Zahnbürste mit einem Haftelement nach Anspruch 1, **dadurch gekennzeichnet, dass** das Verbindungselement **(14)** aus Metall besteht.

6. Zahnbürste mit einem Haftelement nach einem der vorstehenden Ansprüche, **dadurch gekennzeichnet, dass** das Verbindungselement **(14)** einen den Saugnapf **(12)** koaxial durchsetzenden Zapfen **(22)** aufweist, der mit einem Flanschrand **(24)** den Saugnapf **(12)** in seinem Inneren **(26)** hintergreift.

7. Zahnbürste mit einem Haftelement nach Anspruch 6, **dadurch gekennzeichnet, dass** der Zapfen **(22)** auf der anderen Seite aus dem Saugnapf **(12)** herausragt.

8. Zahnbürste mit einem Haftelement nach einem der Ansprüche 1 bis 7 **dadurch gekennzeichnet, dass** der Griff **(32)** der Zahnbürste **(30)** das an seinem Ende befestigte Verbindungselement **(14)** an seinem äusseren Bereich umschliesst.

## Claims

1. A toothbrush, which is non-releasably connected to an adhesion element (10) for fixing the toothbrush (30) on a smooth planar surface (16), comprising a suction cup (12) comprising of a rubber-elastic plastics material and having a sealing border (18), **characterised in that** the suction cup (12) is non-releasably connected to a connecting element (14) to attach the toothbrush (30), **in that** the connecting element (14) comprising a material, which is more rigid than the plastics material of the suction cup (12), and **in that** the toothbrush (30) is connected to the adhesion element (10) by ultrasonic welding, adhesion or the supply of heat.

2. A toothbrush comprising an adhesion element according to claim 1, **characterised in that** the connecting element (14) comprises of plastics material.

3. A toothbrush comprising an adhesion element according to claim 1 or claim 2, **characterised in that** the suction cup (12) and the connecting element (14) are produced by two-component injection moulding and are thereby non-releasably connected to one another.

4. A toothbrush comprising an adhesion element according to claim 1 or claim 2, **characterised in that** the suction cup (12) and the connecting element (14) are non-releasably connected to one another by ultrasonic welding.

5. A toothbrush comprising an adhesion element according to claim 1, **characterised in that** the connecting element (14) comprises metal.

6. A toothbrush comprising an adhesion element according to any one of the preceding claims, **characterized in that** the connecting element (14) has a stub (22) which passes through the suction cup (12) coaxially and grips, with a flange border (24), behind the suction cup (12) in the inter or (26) of the latter.

7. A toothbrush comprising an adhesion element according to claim 6, **characterised in that** the stub (22) projects out of the suction cup (12) on the other side.

8. A toothbrush comprising an adhesion element according to any one of claims 1 to 7, **characterised in that** the handle (32) of the toothbrush (30) surrounds the connecting element (14) that is fastened at its end, at its outer region.

## Revendications

1. Brosse à dents, reliée de façon inamovible à un élément adhésif (10) destiné à fixer la brosse à dents (30) sur une surface lisse et plane (16), avec une ventouse (12) composée d'une matière plastique élastique et présentant un bord d'étanchéité (18), **caractérisée en ce que** la ventouse (12) est reliée de façon inamovible à un élément de connexion (14) pour le montage de la brosse à dents (30), **en ce que** l'élément de connexion (14) est composé d'un matériau qui est plus dur que la matière plastique de la ventouse (12), et **en ce que** la brosse à dents (30) est reliée à l'élément adhésif (10) par soudage par ultrasons, collage ou apport de chaleur.

2. Brosse à dents avec un élément adhésif selon la revendication 1, **caractérisée en ce que** l'élément de connexion (14) est composé de matière plastique.

3. Brosse à dents avec un élément adhésif selon la revendication 1 ou 2, **caractérisée en ce que** la ventouse (12) et l'élément de connexion (14) sont fabriqués par un procédé de moulage par injection à deux composants et sont ainsi reliés ensemble de façon inamovible.

4. Brosse à dents avec un élément adhésif selon la revendication 1 ou 2, **caractérisée en ce que** la ventouse (12) et l'élément de connexion (14) sont reliés ensemble de façon inamovible par soudage par ultrasons.

5. Brosse à dents avec un élément adhésif selon la revendication 1, **caractérisée en ce que** l'élément de connexion (14) est composé de métal.

6. Brosse à dents avec un élément adhésif selon l'une quelconque des revendications précédentes, **caractérisée en ce que** l'élément de connexion (14) présente un tourillon (22) traversant la ventouse (12) de façon coaxiale et qui saisit à l'aide d'un bord de collerette (24) la ventouse (12) par l'intérieur (26) de celle-ci.

7. Brosse à dents avec un élément adhésif selon la revendication 6, **caractérisée en ce que** le tourillon (22) dépasse de l'autre côté de la ventouse (12).

8. Brosse à dents avec un élément adhésif selon l'une quelconque des revendications 1 à 7, **caractérisée en ce que** le manche (32) de la brosse à dents (30) entoure l'élément de connexion (14) fixé à son extrémité, au niveau de la zone extérieure de celui-ci.
